# EUROPÄISCHE PATENTSCHRIFT

(11) **EP 0 839 113 B1**
(45) Veröffentlichungstag und Bekanntmachung des Hinweises auf die Patenterteilung: **29.03.2000**
(21) Anmeldenummer: 96922675.2
(22) Anmeldetag: 17.07.1996
(51) Int. Cl.: B65G 1/137

(54) **KOMMISSIONIERSYSTEM**
COMMISSIONING SYSTEM
INSTALLATION POUR LA PREPARATION DES COMMANDES

(30) Priorität: 18.07.1995 AT 122659
(43) Veröffentlichungstag der Anmeldung: 06.05.1998
(73) Patentinhaber: KNAPP HOLDING GmbH, 8075 Hart bei Graz (AT)
(72) Erfinder: WÜNSCHER, Eduard, A-8075 Hart (AT)
(74) Vertreter: Weinzinger, Arnulf, Dipl.-Ing.
(86) Internationale Anmeldenummer: AT9600125
(87) Internationale Veröffentlichungsnummer: WO9703903

(56) Entgegenhaltungen:
- EP-A- 0 453 682
- EP-A- 0 494 014
- EP-A- 0 515 350

## Beschreibung

Die Erfindung betrifft ein Kommissioniersystem gemäß dem Oberbegriff von Anspruch 1.

Ein solches Kommissioniersystem ist aus der EP 453 682 A bekannt. Dabei ist eine zweireihige Anordnung von Automaten vorgesehen, wobei jeder Automat mehrere Schächte enthält, die jeweils mit einem Ausgabemechanismus versehen sind, um die Produkte abhängig vom jeweiligen Kommissionierauftrag automatisch an einen Zentralförderer abzugeben. Bedienungspersonal ist für das Nachfüllen der Schächte mit Produkten zuständig.

Die Lagerung einer großen Anzahl von Produkten im Großhandel und die Kommissionierung verschiedener Produkte gemäß einem Auftrag ist ein Problem, das typischerweise insbesondere im pharmazeutischen Großhandel, aber auch bei der Auslieferung von Tonträgern (vgl. DE 42 25 041 A), auftritt. Die Erledigung von Aufträgen erfolgt mehrmals täglich. Die Zusammenstellung und Auslieferung der angeforderten Produkte soll dabei nach Eingang des jeweiligen Auftrages so schnell wie möglich erfolgen. Zu diesem Zweck werden häufig auch Kommissionierautomaten eingesetzt (vgl. z.B. EP 592 729 A); diese stellen zwar die Aufträge schnell und zuverlässig zusammen, sind aber in der Anschaffung relativ aufwendig und in der Regel auch nur bei bestimmten Produkten einsetzbar. Kommissionierautomaten müssen zumeist händisch nachgefüllt werden und erfordern eine sorgfältige Wartung und Pflege. Ein wichtiges Element eines Kommissionierautomaten ist der Auswerfer, der ein Produkt aus einem Stapel ausgibt. Eine Störung an einem Auswerfer kann somit den gesamten Ablauf der Kommissionierung blockieren.

Ein solcher Störfall kann bei einer manuellen Kommissionierung nicht auftreten. Bei der manuellen Kommissionierung stellt üblicherweise jeder Kommissionierer jeweils einen Auftrag nach einer Auftragsliste oder einem -beleg komplett zusammen, wobei die Art und Stückzahl an Produkten pro Auftrag sehr stark variieren kann, d.h. es kommt zu einer unregelmäßigen Auslastung (Stehzeit) der Kommissionierer, die vom wirtschaftlichen Standpunkt gesehen von Nachteil ist.

Aus der DE 41 04 527 A und EP 282 785 A sind weiters Kommissioniervorrichtungen für Stückgüter bekannt, bei denen die Stückgüter, z.B. Medikamente, in einem Paternoster-Regal gelagert und von dort manuell entsprechend den Kommissionieraufträgen entnommen und in ausgewählte kippbare Zwischenlagerungs-Behälter abgelegt werden, von wo sie nach Auftragserledigung automatisch in unterhalb auf einem Förderband vorbeibewegte Transportbehälter überführt werden. Durch das Paternoster-Regal einerseits sowie die Überführung der Stückgüter direkt in die Transportbehälter andererseits sind dabei jedoch der Lagerhaltung, wie insbesondere auch den Kommissioniermöglichkeiten, vor allem der Kommissioniergeschwindigkeit, Grenzen gesetzt.

Des weiteren ist durch die EP 494 014 A1 ein Kommissioniersystem bekannt, bei welchem für jeden Kommissionierer ein bestimmter Lagerbereich und eine in diesem Bereich verfahrbare Kontrolleinrichtung vorgesehen ist, die ein Terminal mit Bildschirm und Tastatur zur interaktiven Kommunikation mit einem Steuerrechner, Barcode-Leseeinrichtungen sowie eine Wiegeeinrichtung für einen bei der Kontrolleinrichtung abgestellten Sammelbehälter für die zu kommissionierenden Produkte umfaßt.

Gemäß der nicht vorveröffentlichten älteren Anmeldung EP 825 957 A (WO 96/36 547 A) zählt schließlich ein Kommissioniersystem zum Stand der Technik gemäß Art.54(3) EPÜ, das zumindest einen Zentralförderer, insbesondere ein Zentralband, zur Aufnahme von gemäß einem Auftrag zusammenzustellenden, von Kommissionierern aus einem Lager zu entnehmenden Produkten und eine Förderanlage zum Abtransport der am Ende des Zentralförderers an einer Übergabestelle übergebenen Produkte in Sammelbehältern aufweist, wobei dem Zentralförderer eine Vielzahl von nebeneinander angeordneten Behältern zur vorübergehenden Aufnahme von jeweils einem Kommissionierauftrag zugehörigen Produkten zugeordnet ist, die Behälter von einem Steuerrechner gesteuert die vorübergehend aufgenommenen Produkte auf den Zentralförderer entleeren, und durch eine vorbestimmte Anzahl der nebeneinander angeordneten Behälter jeweils ein Kommissionierbereich für einen Kommissionierer festgelegt ist, wobei für jeden Kommissionierer ein Terminal vorgesehen ist.

Aufgabe der Erfindung ist die Schaffung eines Kommissioniersystems, welches eine geringe Störanfälligkeit aufweist, eine beleglose Führung der Kommissionierer ermöglicht und eine gleichmäßige Auslastung der Kommissionierer und damit eine Minimierung bzw. Eliminierung von Stehzeiten gewährleistet. Im weiteren soll das Kommissioniersystem so ausgelegt sein, daß auch eine Kombination von automatischer und manueller Kommissionierung in synergistischer Weise ermöglicht wird.

Diese Aufgabe wird erfindungsgemäß durch die in Anspruch 1 angegebenen Merkmale gelöst.

Durch die erfindungsgemäße Ausbildung wird in vorteilhafter Weise eine Art von halbautomatischer Kommissionierung geschaffen, bei der der Kommissionierer beleglos aufgrund der ihm über das (Funk-)Terminal übermittelten Daten sowohl im eigenen Kommissionierbereich als auch gegebenenfalls im benachbarten Kommissionierbereich (Ergänzungs-Kommissionierbereich) beim Heranholen der Produkte aus dem Lager und beim Ablegen dieser Produkte in den hierfür bestimmten Behältern geführt wird, und die restlichen Vorgänge der Kommissionierung von der Steuerung bzw. vom Steuerrechner aus automatisch durchgeführt werden. Gegenüber einer herkömmlichen Kommissioniererführung ergeben sich folgende weitere Vorteile:
- Die Bearbeitung der Aufträge kann - gesteuert durch den Steuerrechner - durch eine Priorisierung früher eingegangener Aufträge stets so weit wie möglich in der Reihenfolge der Auftragseingänge - bei jederzeit möglichem Vorziehen eiliger Aufträge - erfolgen.
- Die Effizienz des Systems bleibt von Unterschieden in der individuellen Leistung der einzelnen Kommissionierer praktisch unbeeinflußt.
- Das System ist in der Lage, Unterschiede in den persönlichen Verteilzeiten eines Kommissionierers aufzunehmen, indem es die Arbeit automatisch auf benachbarte Kommissionierer (und in weiterer Folge auf deren benachbarte Kommissionierer) aufteilen kann.
- Die Zusammenfassung von Aufträgen benachbarter Kommissionierer führt zu einer Minimierung der notwendigen Anzahl von Behältern pro Kommissionierer.
- Die jeweilige Bearbeitung eines eiligsten Auftragsanteils in den Kommissionierbereichen und den Ergänzungs-Kommissionierbereichen minimiert die Belegungszeit der Behälter durch rasche Fertigstellung des gesamten Auftrags im Kommissioniersystem und minimiert dadurch zusätzlich die notwendige Anzahl von Behältern pro Kommissionierer.

Da die zu kommissionierenden Aufträge gemäß der Reihenfolge ihrer Bearbeitung vom Steuerrechner mit einer sequentiellen Kennung (fortlaufende Nummer) versehen werden können, ist das System aufgrund einer Zuteilungsstrategie (Aufteilung eines Auftrages auf Kommissionierbereich und Ergänzungs-Kommissionierbereich) in der Lage, unmittelbar auf hochpriorisierte Aufträge zu reagieren, indem deren sequentielle Kennung auf "Null" gesetzt werden kann. Die Bearbeitung der Auftragsanteile von solchen hochpriorisierten Aufträgen erfolgt durch die als nächste verfügbaren Kommissionierer, unmittelbar nach Abschluß von deren aktuellen Auftragsanteilen. Das Kommissioniersystem ist dadurch in der Lage, eilige Aufträge mit minimaler Durchlaufzeit im Versandbereich bereitzustellen.

Es hat sich für eine besonders rationelle Auftragsbearbeitung als vorteilhaft erwiesen, wenn der Ergänzungs- Kommissionierbereich die Produktarten eines benachbarten Kommissionierbereiches umfaßt.

Eine baulich einfache und damit vorteilhafte Maßnahme zur weiteren Kommunikation zwischen dem Steuerrechner und einem Kommissionierer besteht darin, daß jedem Behälter eine Anzeigeleuchte und/oder eine Quittiertaste zugeordnet sind, welche mit dem Steuerrechner in Verbindung stehen. Dabei kann der jeweilige Kommissionierer mit Hilfe der Anzeigeleuchte - die vorzugsweise am Behälter selbst angebracht ist - einfach und direkt darüber informiert werden, in welchen Behälter er die Produkte abzulegen hat; mit der Quittiertaste kann dann dem Steuerrechner mitgeteilt werden, daß die Befüllung des Behälters abgeschlossen ist.

Damit die kommissionierten Produkte von den Behältern rasch und problemlos auf den Zentralförderer gelangen können, ist ferner vorzugsweise vorgesehen, daß die Behälter durch Schalen mit nach unten klappbaren Böden gebildet sind.

Des weiteren ist es hier von Vorteil, wenn der Boden jeder Schale mit einem steuerbaren Öffnungsmechanismus versehen ist.

Eine ergonomisch günstige Anordnung der Schalen ergibt sich dadurch, daß die Schalen an über dem Zentralförderer angebrachten Plattenhaltern vorgesehen sind, wobei die Schalen in Öffnungen der Plattenhalter eingesetzt sind. Die Plattenhalter können dabei tischplatten- oder regalbrettartig ausgebildet und insbesondere - zwecks verbesserter Einsicht - auch schräg zum Kommissionierer hin abfallend angeordnet sein.

Für eine rasche Auftragserledigung, insbesondere bei großen Längen des Zentralförderers, hat es sich überdies als vorteilhaft erwiesen, wenn der Zentralförderer stetig angetrieben ist.

Zum exakten Festlegen des Zeitpunkts, zu dem die Behälter bzw. Schalen auf den Zentralförderer entleert werden, ist in vorteilhafter Weise vorgesehen, daß dem Zentralförderer ein Weggeber zugeordnet ist, der mit dem Steuerrechner in Verbindung steht.

Steuerungstechnisch ist es von besonderem Vorteil, wenn der Steuerrechner einerseits mit einem Hauptrechner zur Entgegennahme von Aufträgen sowie zur Anforderung von Produkten für das Lager, und andererseits mit einem Automatenrechner verbunden ist, welcher die Signale des Weggebers, der Quittiertaste und einer Sammelbehälter-Erkenneinrichtung an der Übergabestelle am Ende des Zentralförderers empfängt, und welcher den Antrieb für den Zentralförderer, den Antrieb der Förderanlage für die Sammelbehälter, den Öffnungsmechanismus und gegebenenfalls die Anzeigeleuchte für die Schalen steuert.

Um den zeitlichen Ablauf der Kommissionierung möglichst zu verkürzen, ist bevorzugt vorgesehen, daß neben dem Zentralförderer Regale für die Lagerung der jeweils dem Kommissionierbereich eines Kommissionierers zugeordneten Produkte aufgestellt sind.

Vorteilhafterweise ist der Zentralförderer den Aufträgen entsprechend in Segmente unterteilt, deren Länge dem Auftragsvolumen entsprechend individuell durch den Steuerrechner festgelegt ist. Dabei ist also jedes Segment einem Kommissionierauftrag zugeteilt, und durch die Kenntnis der Zentralfördererposition und der Geschwindigkeit ist die jeweilige Zeit bis zur Entleerung des Segments in den zugehörigen Sammelbehälter exakt bestimmbar.

Das bisher beschriebene Kommissioniersystem besteht somit bevorzugt aus einer Anordnung von Schalen, die über einem Förderer, insbesondere einem Zentralband, angeordnet sind. Jedem Kommissionierer ist eine bestimmte Anzahl Schalen in einem zusammenhängenden Bereich zugeordnet.

Bei Bearbeitung eines Kundenauftrages wird zunächst vom Rechner die Zusammenstellung der Produkte möglichst effizient auf mehrere Kommissionierer aufgeteilt, wobei für jeden dieser Kommissionierer ein entsprechender "Kommissionierauftrag" definiert wird. Die seinem Kommissionierauftrag zugehörigen Produkte werden vom jeweiligen Kommissionierer aus Regalen, die nahe dem Zentralband angeordnet sind, entnommen und in eine der Schalen abgelegt. Ein Kundenauftrag kommt somit - je nach Anzahl der involvierten Kommissionierer - in mehreren Schalen zu liegen. Haben alle Kommissionierer ihre Arbeit am Kundenauftrag abgeschlossen und die zugehörigen Produkte in den Schalen abgelegt, werden zum geeigneten Zeitpunkt, vom Rechner gesteuert, die Schalen geöffnet. Die in den Schalen enthaltenen Produkte gleiten auf das Zentralband und werden auf dem dem Kundenauftrag zugeordneten Segment des Zentralbandes gesammelt. Am Ende des Zentralbandes werden die Produkte an den dem Auftrag zugeteilten Transport- oder Sammelbehälter übergeben.

Zur Verbesserung der Kommissionierleistung des Systems ist es weiters von Vorteil, wenn der Förderanlage zusätzlich zumindest ein an sich bekannter, ebenfalls einen Zentralförderer aufweisenden Kommissionierautomat zugeordnet ist, wobei der Zentralförderer des Kommissionierautomaten in Förderrichtung gesehen nach dem mit den Behältern ausgestatteten Zentralförderer angeordnet ist zwecks eventueller automatischer Komplettierung der Kommissionieraufträge. Bevorzugt enthält der Kommissionierautomat dabei ebenfalls ein Zentralband als zentralen Förderer. Bei einem derart aufgebauten "gemischten" System wird eine besonders effiziente Zusammenstellung von Aufträgen ermöglicht, indem je nach Produkttyp eine manuelle oder automatische Kommissionierung erfolgt. Dabei wird insbesondere wie folgt vorgegangen:

Die jeweiligen Kommissionierer bereiten manuell zu kommissionierende Anteile am Kundenauftrag im manuellen System vor. Andererseits wird die Verfügbarkeit automatisch zu kommissionierender Produkte mit Hilfe der überlicherweise vorhandenen Sensorik an den Automatkanälen und der Lagerbestandsführung geprüft. Sind alle Produkte eines Kommissionierauftrags vorhanden und wurde die Vorkommissionierung im manuellen System fertiggemeldet, wird die Sammlung der Anteile am Kundenauftrag eingeleitet. In zeitlich optimierter Reihenfolge werden die Aufträge auf den Zentralbändern (oder anderen Sammelförderern) des manuellen Systems und der Kommissionierautomaten gesammelt.

Ein Sammelbehälter wird an der Übergabestelle des manuellen Systems dem Auftrag zugeordnet, und die Produkte der jeweiligen Auftragsteile werden an den Übergabestellen der Systeme gesammelt. Der Sammelbehälter nimmt danach z.B. den direkten Weg in den Versandbereich, in dem geeignete Sortiersysteme und Akkumulationsstrecken die Sammelbehälter aufnehmen und Touren zusammengestellt werden.

Sonderartikel, die durch das oben beschriebene System nicht bearbeitet werden können, werden konventionell direkt in Behälter kommissioniert und erreichen den Versandbereich über eine eigene Zuführstrecke.

Die Einbindung des manuellen Systems am Startpunkt der gesamten Anlage erbringt dabei vor allem den Vorteil, daß stets Kommissionierbehälter zur Übergabe von fertig kommissionierten Kundenaufträgen zur Verfügung stehen.

In allen beschriebenen Fällen wird mit Vorteil vorgesehen, einzelne Sammelbehälter für die einzelnen Aufträge vorzusehen.

Aus Sicherheitsgründen bzw. zur Vermeidung von Fehllieferungen ist vorzugsweise vorgesehen, daß die Förderanlage nach Übernahme der Produkte eine Kontrollzone durchläuft.

Eine vorteilhafte Ergänzung des Kommissioniersystems besteht auch darin, daß auf der Förderanlage vor der Kontrollzone eine Zuführstrecke zum Einfüllen von Sonderprodukten in die Sammelbehälter vorgesehen ist.

Die Erfindung wird nachfolgend anhand von in der Zeichnung dargestellten bevorzugten Ausführungsbeispielen, auf die sie jedoch nicht beschränkt sein soll, noch weiter erläutert. Es zeigen:
Fig.1 eine schematische Darstellung eines Kommissioniersystems in Gesamtheit, mit einer manuellen Kommissionieranlage in Kombination mit zwei Kommissionierautomaten;
Fig.2 die manuelle Kommissionieranlage in schematischer Vorderansicht;
Fig.3 die manuelle Kommissionieranlage in schematischer Draufsicht;
Fig.4 einen bei der manuellen Kommissionieranlage verwendeten Behälter zum Kommissionieren von Produkten in perspektivischer Darstellung;
Fig.5 ein Blockschema einer Steuerung für das Kommissioniersystem;
Fig.6 ein Schema der manuellen Kommissionieranlage zur Erläuterung der Arbeitsweise der Kommissionierer in Draufsicht;
Fig.7 einen Programmablaufplan für die in Fig.8 gezeigte Zuteilungsstrategie; und
Fig.8 und 9 Diagramme, welche den zeitlichen Verlauf (t in Sekunden) der Belegung der Behälter (Anzahl n der belegten Behälter) bei der manuellen Kommissionieranlage für zwei unterschiedliche Zuteilungsstrategien für die Kommissionierer darstellen.

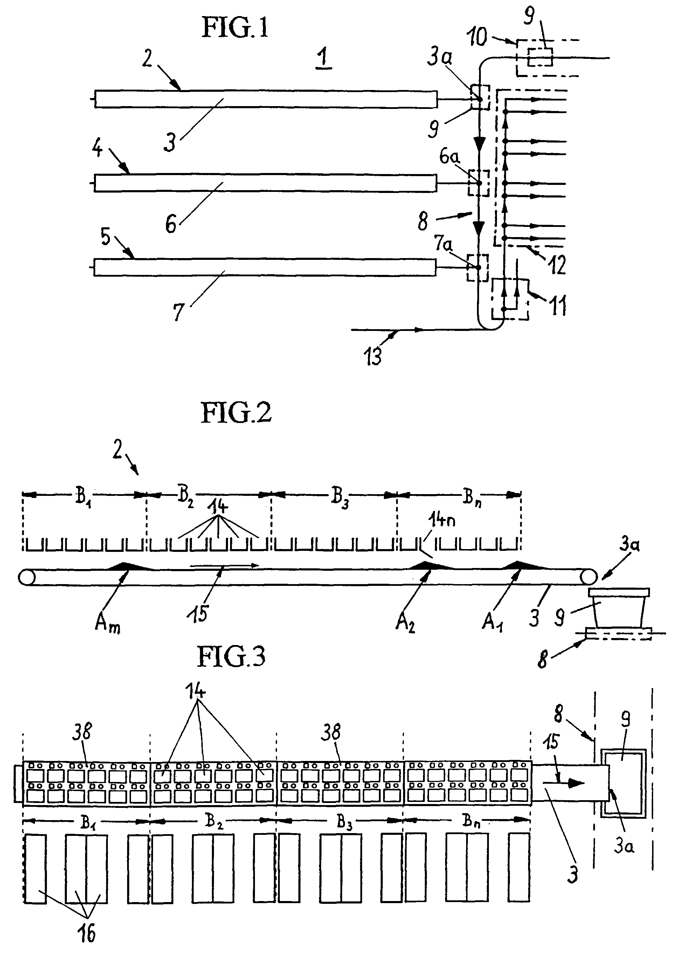

In Fig.1 bezeichnet 1 allgemein ein Kommissioniersystem in seiner Gesamtheit, welches zumindest derzeit als besonders bevorzugt und vorteilhaft angesehen wird, und welches beispielsweise aus einer manuellen Kommissionieranlage 2 mit einem Zentralförderer in Form eines Zentralbandes 3 sowie zwei Kommissionierautomaten 4, 5 mit zentralen Förderern, insbesondere Zentralbändern 6, 7, besteht. An den Ausgabeseiten der Zentralbänder 3, 6 und 7 ist eine Förderanlage 8 mit Sammelbehältern 9 angeordnet, welche aus einem Sammelbehälterlager 10 kommend die von den Zentralbändern 3, 6 und 7 angelieferten kommissionierten Produkte an Übergabestellen 3a, 6a, 7a aufnehmen. Anschließend an das letzte Zentralband 7 befindet sich in der Förderanlage 8 eine Kontrollzone 11, in welcher fehlerhaft kommissionierte Produkte ausgesondert und fehlende Produkte festgestellt werden. Die Förderanlage 8 endet in einem Versandbereich 12, in welchem die Kommissionsware verpackt und zu Liefertouren zusammengestellt wird. In einer vor der Kontrollzone 11 angeordneten Zone können außerhalb des Kommissioniersystems 1 gelagerte Sonderprodukte, wie z.B. großvolumige Produkte, in die Sammelbehälter 10 gefüllt werden, wie mit einer Zuführstrecke 13 angedeutet ist. Die Förderanlage 8 kann beispielsweise als Rollen- oder Kettenfördereinrichtung ausgebildet sein.

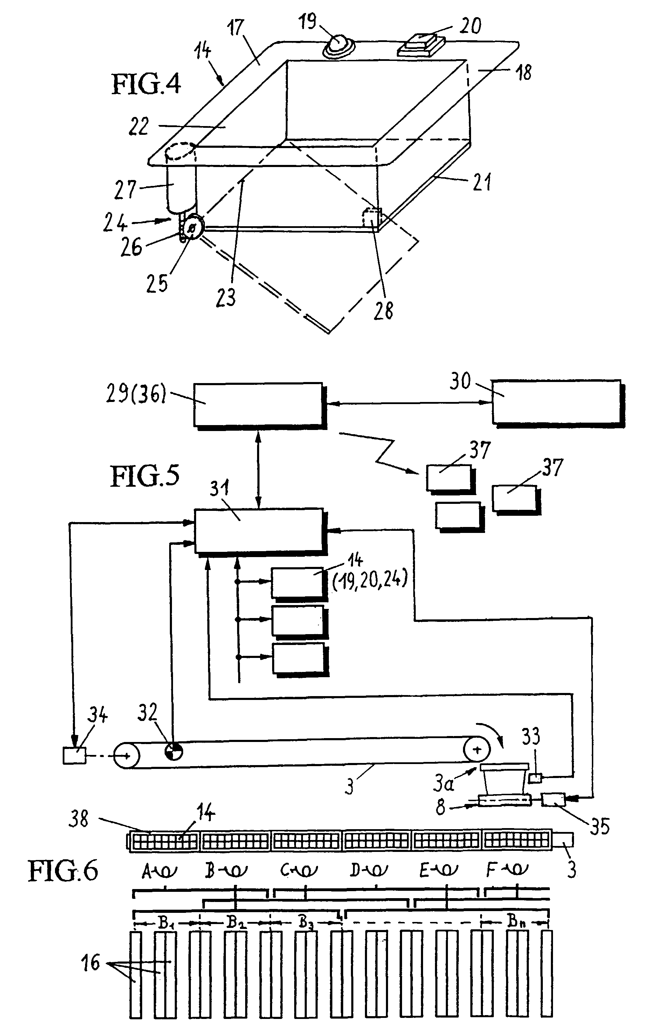

Wie aus Fig.2 und 3 ersichtlich ist, ist bei der manuellen bzw. halbautomatischen Kommissionieranlage 2 dieses Kommissioniersystems 1 oberhalb des Zentralbandes 3 eine Vielzahl von Behältern 14 nebeneinander angeordnet, wobei in diesem Ausführungsbeispiel zwei in Querrichtung und sechs in Längsrichtung des Zentralbandes 3 angeordnete Behälter 14 jeweils einen Kommissionierbereich B₁, B₂, B₃,...Bₙ bilden; diese Kommissionierbereiche B₁, B₂, B₃,...Bₙ sind jeweils einem Kommissionierer zugeordnet, wie nachstehend näher erläutert werden wird.

Die Behälter 14 können durch einen geeigneten Aufbau, z.B. wie nachstehend anhand der Fig.4 erläutert, nach unten geöffnet werden, so daß die Produkte auf das Zentralband 3 gelangen und dort als Aufträge A₁, A₂,...Aₘ gesammelt werden können. In Fig.2 ist der Fall dargestellt, in dem gerade einer der Behälter 14 geöffnet ist und das kommissionierte Produkt aus dem Bereich Bₙ zum Bereich des Auftrages A₂ gelangt. Die Laufrichtung des Zentralbandes 3 ist dabei mit 15 bezeichnet.

In Fig.3 sind nahe dem Zentralband 3 angeordnete, als Lager dienende Regale 16 dargestellt, die ebenso wie die Behälter 14 in die Kommissionierbereiche B₁, B₂, B₃,...Bₙ unterteilt sind, und in denen jeweils bestimmte Produktarten gelagert sind, die hauptsächlich dem in diesem jeweiligen Kommissionierbereich B₁, B₂, B₃,...Bₙ tätigen Kommissionierer zugeordnet sind.

Der in Fig.4 dargestellte Behälter 14 ist als Schale 17 mit Rand 18 ausgebildet, in welchem eine Anzeigeleuchte 19 und eine Quittiertaste 20 eingebaut sind, deren Funktion nachstehend erläutert werden wird. Der Boden 21 der Schale 17 ist am unteren Rand einer quer zur Laufrichtung 15 des Zentralbandes 3 liegenden Seitenwand 22 um eine Querachse schwenkbar gelagert, wobei der Boden 19 mit einer diese Querachse definierenden Welle 23 verbunden ist. Zur Öffnung und Schließung des Bodens 21 trägt die Welle 23 ein zu einem Öffnungsmechanismus 24 gehöriges Schneckenrad 25, in welches eine Schnecke 26 der Antriebswelle eines in seiner Drehrichtung umkehrbaren E-Motors 27 eingreift. Im Bereich des Bodens 21 kann ein Mikroschalter 28 vorgesehen sein, der ein Signal abgibt, wenn der Boden 21 geöffnet bzw. geschlossen wird.

Bei dem in Fig.5 dargestellten Blockschema einer Steuerung für die manuelle Kommissionieranlage 2 ist ein Steuerrechner 29 einerseits mit einem Hauptrechner 30 zur Entgegennahme von Aufträgen sowie zur Anforderung von Produkten für das Lager bzw. die Regale 16 und andererseits mit einem Automatenrechner 31 verbunden, der die Signale der Quittiertaste 20, des Mikroschalters 28, eines Weggebers 32 am Zentralband 3 zur Positionsbestimmung des Zentralbandes 3, und einer Sammelbehälter-Erkenneinrichtung 33 an der Übergabestelle 3a am Ende des Zentralbandes 3 empfängt, und welcher den Antrieb 34 für das Zentralband 3, den Antrieb 35 der Förderanlage 8, den Öffnungsmechanismus 24 und die Anzeigeleuchte 19 der Schalen 17 steuert. Des weiteren umfaßt der Steuerrechner 29 eine Funkanlage 36, die zur Kommunikation mit den Kommissionierern A, B, C,...F (Fig.6) dient. Zu diesem Zweck ist jeder Kommissionierer A, B, C,...F mit einem Terminal, insbesondere einem tragbaren Funkterminal 37 mit alphanumerischer Anzeige und Tastatur, ausgestattet. Mit Hilfe der alphanumerischen Anzeige wird der einzelne Kommissionierer A, B, C,...F über die Art und Anzahl der Produkte für einen Auftrag informiert, und er kann über die Tastatur seines Terminals 37 die Entnahme der Produkte bestätigen sowie Korrekturen vornehmen, z.B. bei Fehlbeständen an Produkten. Grundsätzlich können z.B. auch Infrarot-Sende- bzw. -Empfangsanlagen zur Kommunikation verwendet werden. Das Terminal 37 kann insbesondere von der Art sein, daß es an einem Handgelenk oder Unterarm angeschnallt werden kann.

Wie aus Fig.3 und 6 zu entnehmen ist, sind die Behälter 14 (bzw. Schalen 17) in Öffnungen (nicht dargestellt) von rahmenartigen Plattenhaltern 38 eingesetzt, die hintereinander über dem Zentralband 3 angeordnet sind. Die Plattenhalter 38 können entweder stehend mit dem Boden, regalartig mit Stehern bzw. einer Wand oder auch hängend mit der Decke verbunden sein. Die Breite der Plattenhalter 38 entspricht im wesentlichen der Breite der Kommissionierbereiche B₁, B₂, B₃,...Bₙ.

Anschließend wird die Funktions- und Betriebsweise des beschriebenen Kommissioniersystems 1, insbesondere der manuellen Kommissionieranlage 2, näher erläutert, wobei insbesondere auch auf Fig.6 bezug genommen wird.

Ein Kundenauftrag setzt sich aus beliebigen Produkten aus dem gesamten Lager zusammen, d.h. aus den in den Regalen 16 sowie in den Kommissionierautomaten 4 und 5 enthaltenen Produkten. Die Kommissionierung dieser Produkte erfolgt zum Teil durch das manuelle Kommissioniersystem 2, in welchem mehrere Kommissionierer, in diesem Beispiel sechs Kommissionierer A bis F, tätig sind, die jeder mit einem mobilen Funkterminal 37 ausgestattet sind, welches beispielsweise am Unterarm des Kommissionierers befestigt ist, um beide Hände für die Kommissioniertätigkeit frei zu halten.

Der Steuerrechner 29 erhält vom Hauptrechner 30 die Inhalte der Kundenaufträge, speichert diese und gibt sie in bestimmter Bearbeitungsreihenfolge an den Automatenrechner 31 weiter, der in der Folge die entsprechenden Peripherieeinrichtungen, wie Anzeigeleuchte 19, Antrieb 33 für das Zentralband 3, Antrieb 34 für die Förderanlage 8 usw., zum entsprechenden Zeitpunkt aktiviert. Gleichzeitig werden den Kommissionierern A bis F die Anteile am Kundenauftrag, im weiteren Kommissionieraufträge genannt, welche die jeweiligen Kommissionierer beizutragen haben, über die alphanumerische Anzeige der Funkterminals 37 mitgeteilt. Eine bestimmte Aufteilungsstrategie der Aufträge auf die einzelnen Kommissionierer A bis F gewährleistet die Bereitstellung der fertig bearbeiteten Aufträge in gewünschter vorbestimmbarer Reihenfolge. Dabei wird im Steuerrechner 29 nachfolgend beschriebener Aufteilungsalgorithmus eingesetzt:

Die Kundenaufträge - und nach der Aufteilung auf die Kommisionierer A bis F auch deren einzelne Kommissionieraufträge - werden gemäß der vorgesehenen Bearbeitungsreihenfolge laufend aufsteigend numeriert, womit auch ihre Bearbeitungspriorität festgelegt wird. Kommissionieraufträge mit niedriger laufender Nummer haben in der Bearbeitung höhere Priorität als Kommissionieraufträge mit höherer laufender Nummer.

Jeder Kommissionierer A bis F soll in erster Linie zur Kommissionierung der Produkte in seinem Kommissionierbereich eingesetzt werden, z.B. Kommissionierer A im Bereich B₁, Kommissionierer B im Bereich B₂ usw. und der Kommissionierer F im Kommissionierbereich Bₙ. Bei Bedarf kann jeder Kommissionierer A bis F aber auch zur Kommissionierung der Produkte der oder des benachbarten Kommissionierer(s) eingesetzt werden, z.B. Kommissionierer A zusätzlich im Kommissionierbereich B₂, Kommissionierer B zusätzlich Kommissionierbereich B₁ und B₃ usw., wie dies in Fig.6 symbolisch mit starken Linien dargestellt ist. Man kann demnach von einem Haupt-Kommissionierbereich und von einem oder zwei Ergänzungs-Kommissionierbereichen sprechen, die jedem Kommissionierer A bis F zugeordnet sind. Es ergeben sich somit die Möglichkeiten, daß ein Kommissionierer A bis F Zutritt zum Ergänzungs-Kommissionierbereich hat, u.zw. entweder
a) zu den Regalen 16, d.h. zum Produktbereich des Nachbarn bzw. der Nachbarn, oder
b) zu den Schalen 14 des Nachbarn bzw. der Nachbarn, oder
c) sowohl zu den Regalen 16 als auch zu den Schalen 14 des Nachbarn bzw. der Nachbarn.

Es hat sich gezeigt, daß in der Praxis die unter Punkt a) beschriebene Möglichkeit vielfach am zweckmäßigsten und effizientesten ist, und daher bei der vorliegenden Ausführungsform zur Anwendung gelangt und für die weitere Beschreibung zugrundegelegt wird.

Man könnte diese Strategie, wonach ein einzelnes Produkt von zumindest zwei oder drei Kommissionierern erreicht werden kann, auch auf die übernächsten Kommissionierer ausdehnen, so daß jedes Produkt von vier oder fünf Kommissionierern erreicht werden kann.

Zu Beginn wird das Zentralband 3 in stetigen Betrieb gesetzt, d.h. der Antrieb 34 ist z.B. ein E-Motor mit konstanter Drehzahl. An der Übergabestelle 3a befindet sich ein durch die Förderanlage 8 herangebrachter erster Sammelbehälter 9 für den ersten Auftrag A₁. Die vom Steuerrechner 29 über den Automatenrechner 31 aktivierten Anzeigelampen 19 leuchten bei den entsprechenden den Aufträgen zugeordneten Schalen 17 bei den jeweiligen Kommissionierbereichen B₁, B₂, B₃,...Bₙ auf.

Die Kommissionierer A bis F beginnen mit ihrer Tätigkeit und betätigen je nach Fertigstellung eines Auftrages die Quittiertaste 20 bei der entsprechenden Schale 17. Das Zentralband 3 ist den Aufträgen entsprechend in Segmente unterteilt, deren Länge dem Auftragsvolumen entsprechend individuell durch den Steuerrechner festgelegt ist. Aufgrund der durch den Weggeber 32 dem Steuerrechner 29 bekannten Position eines Auftragsegmentes auf dem Zentralband 3 wird zum richtigen Zeitpunkt der Öffnungsmechanismus 24 dieser Schale 17 betätigt, so daß die Produkte über den geöffneten Boden 21 der Schale 17 auf das vorbestimmte Auftragssegment (z.B. Auftrag A₂ in Fig.2) des Zentralbandes 3 gelangen. Nachdem ein Kommissionierer einen Kommissionierauftrag abgeschlossen hat, wird ihm der nächste Kommissionierauftrag zugewiesen. Dabei teilt der Steuerrechner 29, wie erwähnt, Kundenaufträge in Kommissionieraufträge auf, die den Anteilen der Produktbereiche der einzelnen Kommissionierer A bis F entsprechen. Die Kommissionieraufträge übernehmen die laufende Nummer der Kundenaufträge und damit deren Bearbeitungspriorität.

Der Steuerrechner 29 ermittelt aus der Liste der zu bearbeitenden Kommissionieraufträge die Anteile der - gemäß der vorgesehenen Auftragsreihenfolge - vom Kommissionierer und von seinen Nachbarn als nächstes zu bearbeitenden Aufträge.

Der Kommissionierauftrag des Kommissionierers selbst wird höher priorisiert als die Aufträge seiner Nachbarn, um den Kommissionierauftrag mit den geringen Wegzeiten - der Kommissionierauftrag in dem Produktbereich, der dem Kommissionierer eigen ist - zu favorisieren. Dies wird beispielsweise dadurch erreicht, daß im Rechner zur laufenden Nummer des Kommissionierauftrags ein konstanter, einstellbarer Wert hinzugezählt wird.

Aus den (wenn nur die direkten Nachbarn berücksichtigt werden) zwei oder drei Kommissionieraufträgen wird nun der zu bearbeitende Kommissionierauftrag ermittelt, nämlich jener mit der niedrigsten laufenden Nummer. Dies kann des Kommissionierers eigener Auftrag oder ein Auftrag eines seiner Nachbarn sein.

Kommissionieraufträge zum gleichen Kundenauftrag innerhalb benachbarter Kommissionierbereiche werden zur Ersparnis von Schalen zusammengezogen. In diesem Fall wird nur ein einziger Kommissionierer mit der Summe der Kommissionieraufträge befaßt.

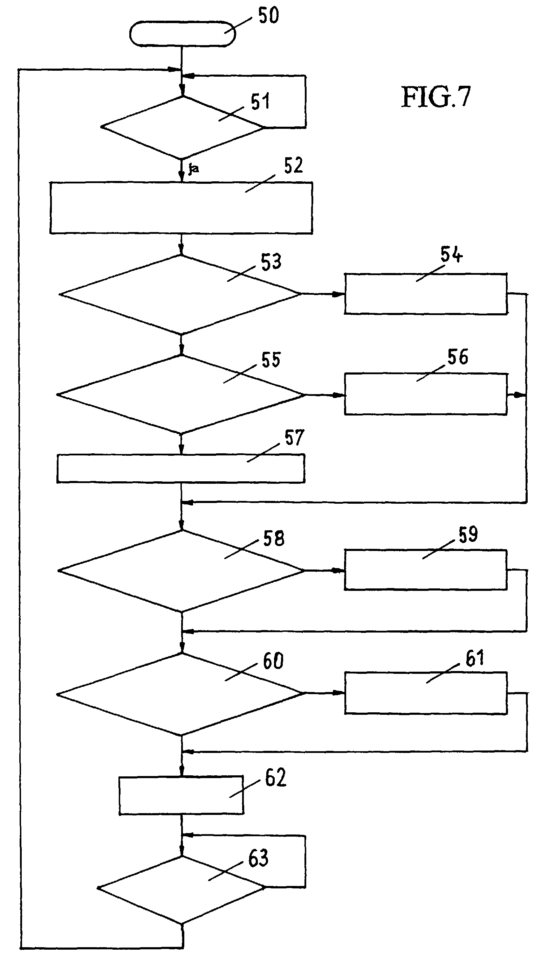

Diese Zuordnungsstrategie ist im Programmablaufdiagramm nach Fig.7 dargestellt. Dabei wird nach einem Startschritt 50 bei der Verzweigung 51 abgefragt, ob ein Kommissionierer seinen Auftrag erledigt hat, d.h. sich für einen weiteren Auftrag angemeldet hat. Wenn dies der Fall ist, so wird in der nächsten Verarbeitungseinheit 52 die Prioritätsstufe des nächsten offenen Kommissionierauftrags des Kommissionierers um einen Schwellwert, d.h. um einen konstanten, einstellbaren Wert, erhöht. Sinn der Priorisierung ist, die Wegzeiten der Kommissionierer durch Bevorzugung des eigenen Kommissionierbereichs klein zu halten. Ist kein Kommissionierer frei, so wird die Abfrage in der Verzweigung 51 wiederholt. In der darauffolgenden Verzweigung 53 wird abgefragt, ob die Priorität des Auftrages des benachbarten linken Kommissionierers höher ist. Wenn ja, so wird dieser Kommissionierauftrag des linken Nachbarn gemäß einer Verarbeitungseinheit 54 zugeteilt. Ist dies nicht der Fall, so wird in einer weiteren Verzweigung 55 abgefragt, ob die Priorität des Auftrages des benachbarten rechten Kommissionierers höher ist. Wenn ja, so wird dieser Kommissionierauftrag des benachbarten rechten Kommissionierers durch eine Verarbeitungseinheit 56 dem fraglichen Kommissionierer zugeteilt. Ist dies nicht der Fall, so wird in einer darauffolgenden Verarbeitungseinheit 57 ein eigener Kommissionierauftrag zugeteilt. Die Resultate der Verarbeitungseinheiten 54, 56 und 57 werden in einer diesen Verarbeitungseinheiten nachgeordneten Verzweigung 58 dahingehend überprüft, ob der benachbarte linke Kommissionierer noch offene Anteile am selben Kundenauftrag hat, oder nicht. Wenn ja, wird über eine Verarbeitungseinheit 59 der Anteil des benachbarten rechten Kommissionierers zusätzlich zugeteilt. Ist dies nicht der Fall, so wird in einer, der Verzweigung 58 nachgeordneten Verzweigung 60 überprüft, ob der benachbarte rechte Kommissionierer noch offene Anteile am Kundenauftrag hat, oder nicht. Wenn ja, wird der Anteil des linken Nachbarn zusätzlich zugeteilt, siehe Verarbeitungseinheit 61. Sinn der Zusammenfassung ist die Ersparnis von belegten Kommissionierbehältern. Die Resultate der Verarbeitungseinheit 61 und der Verzweigung 60 laufen in einer Verarbeitungseinheit 62 zusammen, von der der Befehl zum Kommissionieren erteilt wird, wonach zu einer weiteren Verzweigung 63 übergegangen wird, wo abgefragt wird, ob der Kommissionierer seinen Auftrag(santeil) erledigt, d.h. quittiert, hat. Erfolgte eine Quittierung durch den Kommissionierer, so wird der Vorgang nach dem Startschritt 50 wiederholt. Erfolgte noch keine Quittierung, so wird nochmals abgefragt, ob eine Quittierung stattgefunden hat.

Die Bedeutung dieser Zuordnungsstrategie für die Funktionsfähigkeit und Effizienz der manuellen Kommissionieranlage 2 wurde mit Hilfe einer rechnerischen Simulation nachgewiesen. Diese Zuordnungsstrategie wurde sodann in der Computersimulation weiters durch eine vereinfachte Strategie ersetzt, bei der die Kommissionieraufträge ausschließlich entsprechend der Produktpalette der jeweiligen Kommissionierer aufgeteilt werden, so daß ein möglicher gemeinsamer Zugriff auf Lagerorte durch benachbarte Kommissionierer unterbleibt.

Gemeinsame Randbedingungen der beiden Simulationsläufe:

| | |
|---|---|
| Simulationsdauer | 5 Stunden |
| Kommissioniereranzahl | 20 |
| Schalen pro Kommissionierer | 40 |
| Kommissionierleistung | 200 Zeilen/Stunde (für alle gleich) |
| Auftragsgröße | 4±3 Auftragszeilen gleichverteilt |
| Auftragsabstand am Zentralband | 3 m |
| Zentralbandgeschwindigkeit | 1 m/s |

Die Zugriffswahrscheinlichkeit auf die Produktbereiche aller Kommissionierer A bis F wurde als gleich groß angenommen.

In beiden Simulationsläufen wurden die identischen Auftragsdaten verwendet. Im Ergebnis treten Stehzeiten auf, wenn ein Kommissionierer keine Arbeit verrichten kann. Dies kann dann auftreten, wenn für einen Kommissionierer kein Kommissionierauftrag verfügbar ist, oder ein Kommissionierer trotz verfügbarem Auftrag seine Arbeit nicht verrichten kann, da keine freie Schale existiert, in die er die kommissionierten Produkte ablegen kann. Dabei konnten folgende Ergebnisse festgestellt werden:

| | |
|---|---|
| Summenstehzeit bei der ersten Strategie | 0.00 Stunden |
| Summenstehzeit bei der vereinfachten Strategie | 1.09 Stunden |

Bei der einzusetzenden ersten Strategie treten also überhaupt keine Stehzeiten auf. Die vereinfachte Strategie führt dagegen zu einem Verlust von über einer Arbeitsstunde.

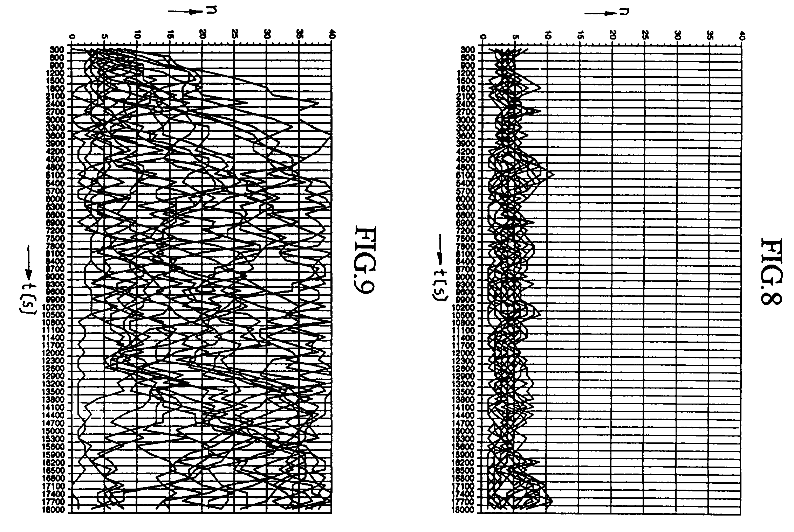

Die Diagramme nach Fig.8 und 9 illustrieren den zeitlichen Verlauf der Schalenbelegung bei den beiden Zuteilungsstrategien, wobei Fig.8 die erste Strategie und Fig.9 die vereinfachte Strategie zeigen, wobei auf der Abszisse die Zeit t in s und auf der Ordinate die Anzahl n der belegten Schalen aufgetragen ist.

Die Diagramme nach Fig.8 und 9 zeigen deutlich, daß der Einsatz der vorgeschlagenen Auftragszuteilungsstrategie für eine effiziente Nutzung des Systems von Bedeutung ist.

Zurückkehrend zum Gesamt-Kommissioniersystem 1 nach Fig.1 erfolgt die Zusammenstellung von Aufträgen wie folgt:

Die Kommissionierer (A bis F in Fig.6) bereiten manuell zu kommissionierende Anteile am Kundenauftrag im manuellen System 2 vor. Die Verfügbarkeit von Produkten aus den Kommissionierautomaten 4 und 5 wird mit Hilfe von Sensoren in den Kanälen der Kommissionierautomaten 4 und 5 sowie mit Hilfe einer Lagerbestandsführung durch den Hauptrechner 30 überprüft. Sind sämtliche Produkte eines Auftrages vorhanden, so erfolgt nach der manuellen Kommissionierung ein Weitertransport der Sammelbehälter 9 von der Übergabestelle 3a zu den Zentralbändern 6, 7 der Kommissionierautomaten 4, 5, von diesen (nach Befüllen) zur Kontrollzone 11 und letztlich zum Versandbereich 12, wobei, wie bereits einleitend erwähnt, Sonderartikel vor der Kontrollzone 11 in konventioneller Weise direkt in die Sammelbehälter 9 kommissioniert werden. Die Förderanlage 8 wird dabei aufgrund der vom Steuer- bzw. Automatenrechner 29 bzw. 31 abgegebenen Signale schrittweise in Betrieb gesetzt, wobei dem Steuerrechner 29 bzw. Automatenrechner 31 die Position der Sammelbehälter 9 durch die Erkennungseinrichtung 33 bekannt ist.

Das beschriebene Kommissioniersystem 1 ist beispielhaft zu verstehen, d.h. es ist auch möglich, mehrere manuelle Kommissioniersysteme 1 parallel und/oder nur ein automatisches Kommissioniersystem bzw. mehr als zwei Kommissionierautomaten 4, 5 anzuordnen. Auf jeden Fall ist es vorteilhaft, die manuellen Kommissioniersysteme 2 am Startpunkt des Sammelbehälterflusses zu placieren. Da ein Start eines Sammelbehälters 9 erst erfolgt, wenn alle Kommissionierungen eines Auftrages abgeschlossen sind, wird so die mittlere Belegzeit der Schalen 17 am manuellen Kommissioniersystem 2 niedrig gehalten und die nötige Anzahl von Schalen 17 pro Kommissionierer vermindert.

## Patentansprüche

1. Kommissioniersystem (1) mit zumindest einem Zentralförderer (3), insbesondere Zentralband, zur Aufnahme von gemäß einem Auftrag zusammenzustellenden, von Kommissionierern (A - F) aus einem Lager (16) zu entnehmenden Produkten und mit einer Förderanlage (8) zum Abtransport der am Ende des Zentralförderers (3) an einer Übergabestelle (3a) übergebenen Produkte in Sammelbehältern (9), und mit einer Vielzahl von im Bereich des Zentralförderers (3) nebeneinander angeordneten Behältern (14) zur Aufnahme von Produkten, die automatisch an den Zentralförderer (3) abgebbar sind, dadurch gekennzeichnet, daß die Behälter (14) zur vorübergehenden Aufnahme von jeweils einem Kommissionierauftrag zugehörigen Produkten eingerichtet sind und von einem Steuerrechner (29) gesteuert die vorübergehend aufgenommenen Produkte auf den Zentralförderer (3) entleeren, daß durch eine vorbestimmte Anzahl der nebeneinander angeordneten Behälter (14) jeweils ein Kommissionierbereich (B₁, B₂, B₃,...Bₙ) für einen Kommissionierer (A - F) festgelegt ist, wobei für jeden Kommissionierer (A - F) ein Terminal (37) vorgesehen ist, und daß der Steuerrechner (29) eingerichtet ist, jeden der Kommissionierer (A - F) über das Terminal, insbesondere ein tragbares Funkterminal (37), außer in einem zugeordneten eigenen Kommissionierbereich (B₁, B₂, B₃...Bₙ) auch in zumindest einem dem zugeordneten Kommissionierbereich benachbarten Ergänzungs-Kommissionierbereich zu führen, wobei jedem Kommissionierbereich (B₁, B₂, B₃,...Bₙ) eine vorbestimmte Anzahl von Produktarten im Lager zugeordnet ist.

2. Kommissioniersystem nach Anspruch 1, dadurch gekennzeichnet, daß der Ergänzungs-Kommissionierbereich die Produktarten eines benachbarten Kommissionierbereiches (B₁ , B₂, B₃,...Bₙ) umfaßt.

3. Kommissioniersystem nach Anspruch 1 oder 2, dadurch gekennzeichnet, daß jedem Behälter (14) eine Quittiertaste (20) zugeordnet ist, welche mit dem Steuerrechner (29) in Verbindung steht.

4. Kommissioniersystem nach einem der Ansprüche 1 bis 3, dadurch gekennzeichnet, daß jedem Behälter (14) eine Anzeigeleuchte (19) zugeordnet ist, welche mit dem Steuerrechner (29) in Verbindung steht.

5. Kommissioniersystem nach einem der Ansprüche 1 bis 4, dadurch gekennzeichnet, daß die Behälter (14) durch Schalen (17) mit nach unten klappbaren Böden (21) gebildet sind.

6. Kommissioniersystem nach Anspruch 5, dadurch gekennzeichnet, daß der Boden (21) jeder Schale (17) mit einem steuerbaren Öffnungsmechanismus (24) versehen ist.

7. Kommissioniersystem nach Anspruch 5 oder 6, dadurch gekennzeichnet, daß die Schalen (17) an über dem Zentralband (3) angebrachten Plattenhaltern (38) vorgesehen sind, wobei die Schalen (17) in Öffnungen der Plattenhalter (38) eingesetzt sind.

8. Kommissioniersystem nach einem der Ansprüche 1 bis 7, dadurch gekennzeichnet, daß der Zentralförderer (3) stetig angetrieben ist.

9. Kommissioniersystem nach einem der Ansprüche 1 bis 8, dadurch gekennzeichnet, daß dem Zentralförderer (3) ein Weggeber (32) zugeordnet ist, der mit dem Steuerrechner (29) in Verbindung steht.

10. Kommissioniersystem nach einem der Ansprüche 3 bis 9, dadurch gekennzeichnet, daß der Steuerrechner (29) einerseits mit einem Hauptrechner (30) zur Entgegennahme von Aufträgen sowie zur Anforderung von Produkten für das Lager, und andererseits mit einem Automatenrechner (31) verbunden ist, welcher die Signale des Weggebers (32), der Quittiertaste (20) und einer Sammelbehälter-Erkenneinrichtung (33) an der Übergabestelle (3a) am Ende des Zentralförderers (3) empfängt, und welcher den Antrieb (34) für den Zentralförderer, den Antrieb (35) der Förderanlage (8) für die Sammelbehälter, den Öffnungsmechanismus und gegebenenfalls die Anzeigeleuchte für die Schalen (17) steuert.

11. Kommissioniersystem nach einem der Ansprüche 1 bis 10, dadurch gekennzeichnet, daß neben dem Zentralförderer (3) Regale (16) für die Lagerung der jeweils dem Kommissionierbereich (B₁, B₂, B₃,...Bₙ) eines Kommissionierers (A bis F) zugeordneten Produkte angebracht sind.

12. Kommissioniersystem nach einem der Ansprüche 1 bis 11, dadurch gekennzeichnet, daß der Zentralförderer (3) den Aufträgen entsprechend in Segmente unterteilt ist, deren Länge dem Auftragsvolumen entsprechend individuell durch den Steuerrechner festgelegt ist.

13. Kommissioniersystem nach einem der Ansprüche 1 bis 11, dadurch gekennzeichnet, daß der Förderanlage (8) zusätzlich zumindest ein ebenfalls einen Zentralförderer (6, 7) aufweisenden Kommissionierautomat (4, 5) zugeordnet ist, wobei der Zentralförderer (6, 7) des Kommissionierautomaten (4, 5) in Förderrichtung gesehen nach dem mit den Behältern (14) ausgestatteten Zentralförderer (3) angeordnet ist zwecks eventueller automatischer Komplettierung der Kommissionieraufträge.

14. Kommissioniersystem nach einem der Ansprüche 1 bis 13, dadurch gekennzeichnet, daß die Förderanlage (8) mit Sammelbehältern (9) für die einzelnen Aufträge aufgebaut ist.

15. Kommissioniersystem nach einem der Ansprüche 1 bis 14, dadurch gekennzeichnet, daß die Förderanlage (8) nach Übernahme der Produkte eine Kontrollzone (11) durchläuft.

16. Kommissioniersystem nach Anspruch 15, dadurch gekennzeichnet, daß auf der Förderanlage (8) vor der Kontrollzone (11) eine Zuführstrecke (13) zum Einfüllen von Sonderprodukten in die Sammelbehälter (9) vorgesehen ist.

## Claims

1. A commissioning system (1) comprising at least one central conveyor (3), in particular a central belt, for receiving products to be taken from a stock (16) by commissioners (A - F) and to be assembled according to an order, and a conveying installation (8) to move away in collecting containers (9) the products transferred at a transfer site (3a) at the end of the central conveyor (3), and a plurality of containers (14) adjacently arranged in the region of the central conveyor (3) to receive products, said products being automatically deliverable to the central conveyor (3), characterized in that the containers (14) are arranged to temporarily receive products associated to a respective commissioning order and empty the temporarily received products onto the central conveyor (3) under the control of a control computer (29), that a predetermined number of the adjacently arranged containers (14) each define a respective commissioning region (B₁, B₂, B₃, ...Bₙ) for a commissioner (A - F), a terminal (37) being provided for each commissioner (A - F), and that the control computer (29) is arranged to guide each one of the commissioners (A - F) via the terminal, in particular a portable radio terminal (37), in addition to the commissioning region associated to the respective commissioner (B₁, B₂, B₃...Bₙ), also in at least one supplementary commissioning region neighbouring the associated commissioning region, a predetermined number of product types on stock being associated to each commissioning region (B₁, B₂, B₃,...Bₙ).

2. A commissioning system according to claim 1, characterized in that the supplementary commissioning region comprises the product types of a neighbouring commissioning region (B₁, B₂, B₂,...Bₙ).

3. A commissioning system according to claim 1 or 2, characterized in that each container (14) has an associated quitting switch (20) connected with the control computer (29).

4. A commissioning system according to any one of claims 1 to 3, characterized in that each container (14) has an associated indication light (19) connected with the control computer (29).

5. A commissioning system according to any one of claims 1 to 4, characterized in that the containers (14) are formed by trays (17) having bottoms (21) capable of being pivoted downwards.

6. A commissioning system according to claim 5, characterized in that the bottom (21) of each tray (17) is provided with a controllable opening mechanism (24).

7. A commissioning system according to claim 5 or 6, characterized in that the trays (17) are provided on plate holders (38) mounted above the central belt (3), the trays (17) being inserted in apertures of the plate holders (38).

8. A commissioning system according to any one of claims 1 to 7, characterized in that the central conveyor (3) is continuously driven.

9. A commissioning system according to any one of claims 1 to 8, characterized in that a path sensor (32) is associated with the central conveyor (3) and connected with the control computer (29).

10. A commissioning system according to any one of claims 3 to 9, characterized in that the control computer (29) is connected with a main computer (30), on the one hand, to receive orders and to demand products for the stock, and with an automatic machine computer (31), on the other hand, which receives the signals of the path sensor (32), of the quitting switch (20) and of a collecting container recognition means (33) at the transfer site (3a) at the end of the central conveyor (3), and which controls the drive (34) for the central conveyor, the drive (35) of the conveying installation (8) for the collecting containers, the opening mechanism and, optionally, the indication light for the trays (17).

11. A commissioning system according to any one of claims 1 to 10, characterized in that shelves (16) are arranged adjacent the central conveyor (3) for storing the products associated with the respective commissioning region (B₁, B₂, B₃...Bₙ) of a commissioner (A to F).

12. A commissioning system according to any one of claims 1 to 11, characterized in that the central conveyor (3) is subdivided into segments according to the orders, the length of the segments being individually defined by the control computer in accordance with the size of the order.

13. A commissioning system according to any one of claims 1 to 11, characterized in that at least one commissioning machine (4, 5) also comprising a central conveyor (6, 7) is additionally associated with the conveying installation (8), the central conveyor (6, 7) of the commissioning machine (4, 5), viewed in the conveying direction, being arranged downstream of the central conveyor (3) equipped with the containers (14) for a possible automatic completion of the commissioning orders.

14. A commissioning system according to any one of claims 1 to 13, characterized in that the conveying installation (8) is assembled with collecting containers (9) for the individual orders.

15. A commissioning system according to any one of claims 1 to 14, characterized in that the conveying installation (8) passes through a checking zone (11) after having received the products.

16. A commissioning system according to claim 15, characterized in that a supply path (13) for filling special products into the collecting containers (9) is provided on the conveying installation (8) upstream of the checking zone (11).

## Revendications

1. Système de préparation des commandes (1) comprenant au moins un convoyeur central (3), notamment une bande centrale, pour la réception de produits qui doivent être réunis selon une commande et qui doivent être sortis d'un stock (16) par des préparateurs de commandes (A à F), et comprenant une installation de convoyage (8) pour l'expédition des produits transférés à la fin du convoyeur central (3) à un emplacement de transfert (3a) dans des récipients collecteurs (9), et comprenant une multitude de récipients(14) disposés, l'un à côté de l'autre, dans la zone du convoyeur central (3), pour la réception de produits qui peuvent être transférés automatiquement au convoyeur central (3), caractérisé en ce que les récipients (14) sont prévus pour la réception temporaire des produits appartenant à une commande à préparer et commandés par un calculateur de commande (29), déversent les produits reçus temporairement sur le convoyeur central (3), en ce qu'une zone de préparation de commandes (B₁, B₂, B₃,...Bₙ) est déterminée pour chaque préparateur de commandes (A à F), par un nombre prédéterminé des récipients (14) disposés l'un à côté de l'autre, un terminal (37) étant prévu pour chaque préparateur de commandes (A à F), et en ce que le calculateur de commande (29) est adapté pour guider chacun des préparateurs de commandes (A à F) par l'intermédiaire du terminal, notamment un radio terminal portable (37), outre dans une zone de préparation de commandes propre et associée (B₁, B₂, B₃,...Bₙ), aussi dans au moins une zone de préparation de commandes complémentaire voisine de la zone de préparation de commande associée, un nombre prédéterminé de types de produits dans le stock étant associé à chaque zone de préparation de commandes (B₁, B₂, B₃,...Bₙ).

2. Système de préparation des commandes selon la revendication 1, caractérisé en ce que la zone de préparation des commandes complémentaire comprend les types de produits d'une zone de préparation des commandes voisine (B₁, B₂, B₃,...Bₙ).

3. Système de préparation des commandes selon la revendication 1 ou 2, caractérisé en ce qu'une touche de confirmation (20) est associée à chaque récipient (14), touche qui est en liaison avec le calculateur de commande (29).

4. Système de préparation des commandes selon l'une des revendications 1 à 3, caractérisé en ce qu'une lumière d'affichage (19) qui est reliée au calculateur de commande (29) est associée à chaque récipient (14).

5. Système de préparation des commandes selon l'une des revendications 1 à 4, caractérisé en ce que les récipients (14) sont formés par des cuvettes (17) ayant des fonds (21) pouvant être basculés vers le bas.

6. Système de préparation des commandes selon la revendication 5, caractérisé en ce que le fond (21) de chaque cuvette (17) est pourvu d'un mécanisme d'ouverture (24) commandable.

7. Système de préparation des commandes selon la revendication 5 ou la revendication 6, caractérisé en ce que les cuvettes (17) sont prévues sur des supports à plaques (38) installés au-dessus de la bande centrale (3), les cuvettes (17) étant insérées dans des ouvertures des supports à plaques (38).

8. Système de préparation des commandes selon l'une des revendications 1 à 7, caractérisé en ce que le convoyeur central (3) est entraîné de façon continue.

9. Système de préparation des commandes selon l'une des revendications 1 à 8, caractérisé en ce qu'un capteur de déplacement (32), qui est en liaison avec le calculateur de commande (29), est associé au convoyeur central (3).

10. Système de préparation des commandes selon l'une des revendications 3 à 9, caractérisé en ce que le calculateur de commande (29) est relié, d'une part, à un calculateur principal (30) pour la réception de commandes, ainsi que pour la demande de produits pour le stock, et, d'autre part, à un calculateur d'automatisation (31) qui reçoit les signaux du capteur de déplacement (32), de la touche de confirmation (20) et d'un dispositif (33) de reconnaissance de récipient collecteur disposé à l'emplacement de transfert (3a) à la fin du convoyeur central (3), et qui commande l'entraînement (34) pour le convoyeur central, l'entraînement (35) de l'installation de convoyage (8) pour les récipients collecteurs, le mécanisme d'ouverture, et, le cas échéant, la lumière d'affichage des cuvettes (17).

11. Système de préparation des commandes selon l'une des revendications 1 à 10, caractérisé en ce que des rayons (16) pour le stockage des produits associés à la zone de préparation de commandes (B₁, B₂, B₃,...Bₙ) respective d'un préparateur de commandes (A à F) sont installés à côté du convoyeur central (3).

12. Système de préparation des commandes selon l'une des revendications 1 à 11, caractérisé en ce que le convoyeur central (3) est divisé, de façon correspondant aux commandes, en segments dont la longueur est déterminée individuellement par le calculateur de commande de façon correspondant au volume des commandes.

13. Système de préparation des commandes selon l'une des revendications 1 à 11, caractérisé en ce qu'au moins un automate de préparation de commandes (4,5) comportant également un convoyeur central (6,7) est associé de plus à l'installation de convoyage (8), le convoyeur central (6,7) de l'automate de préparation de commandes étant disposé, vu dans le sens de convoyage, en aval du convoyeur central (3) équipé des récipients (14), afin de compléter éventuellement automatiquement les ordres de préparation de commandes.

14. Système de préparation des commandes selon l'une des revendications 1 à 13, caractérisé en ce que l'installation de convoyage (8) est construite avec des récipients collecteurs (9) pour les commandes individuelles.

15. Système de préparation des commandes selon l'une des revendications 1 à 14, caractérisé en ce que l'installation de convoyage (8) traverse une zone de contrôle (11) après la réception des produits.

16. Système de préparation des commandes selon la revendication 15, caractérisé en ce qu'une section d'alimentation (13) pour l'introduction de produits spéciaux dans les récipients collecteurs est prévue sur l'installation de convoyage (8) avant la zone de contrôle (11).
